# EUROPEAN PATENT SPECIFICATION

(11) **EP 4 514 896 B1**
(45) Date of publication and mention of the grant of the patent: **05.11.2025**
(21) Application number: 23733067.5
(22) Date of filing: 31.05.2023
(51) Int. Cl.: C08L 67/02

(54) **THERMOPLASTIC COMPOSITIONS HAVING HIGH METAL BONDING FORCE FOR NMT APPLICATIONS**
THERMOPLASTISCHE ZUSAMMENSETZUNGEN, DIE EINE HOHE METALLHAFTUNGSKRAFT FÜR NMT-ANWENDUNGEN AUFWEISEN
COMPOSITIONS THERMOPLASTIQUES AYANT UNE FORCE DE LIAISON MÉTALLIQUE ÉLEVÉE POUR DES APPLICATIONS DE NMT

(30) Priority: 01.06.2022 EP 22176708
(43) Date of publication of application: 05.03.2025
(73) Proprietor: SHPP Global Technologies B.V., 4612 PX Bergen op Zoom (NL)
(72) Inventor: WANG, Qin, Shanghai 201319 (CN); GUO, Mingcheng, Shanghai 201319 (CN); YANG, Jian, Shanghai 201319 (CN)
(74) Representative: Modiano, Gabriella Diana
(86) International application number: PCT/IB2023/055584
(87) International publication number: WO 2023/233325

(56) References cited:
- EP-A1- 3 919 569
- US-A1- 2017 029 615
- US-A1- 2019 322 861

## Description

### FIELD OF THE DISCLOSURE

The present disclosure relates to thermoplastic compositions including a chemically recycled polyester component that have improved metal bonding properties.

### BACKGROUND OF THE DISCLOSURE

Polybutylene terephthalate (PBT) is a thermoplastic polymer that provides good chemical resistance, is easy to process, and which offers good dimensional stability properties. PBT is widely used in nano-molding technology (NMT) applications. Unfortunately, the bonding strength of PBT is reduced after it is molded into the nano-holes of the metal substrate. As a result, a promoter additive must be added to the PBT composition in NMT applications. The promoter additive may adversely affect other properties. Separately, the increase in environmental standards and agreements (such as the Paris Climate Agreement) has increased the desire for more sustainable solutions.

European Patent application EP3919569A1 describes thermoplastic compositions including from about 40 wt% to about 90 wt% of a crystalline polymer, from about 5 wt% to about 50 wt% basalt fibers, and from about 1 wt% to about 20 wt% of an impact modifier. In some aspects the crystalline polymer includes polybutylene terephthalate (PBT), polyphenylene sulfide (PPS), copolymers thereof, or a combination thereof. The thermoplastic compositions are suitable for use in nano molding technology (NMT) applications, and in particular for consumer electronics applications.

These and other shortcomings are addressed by aspects of the present disclosure.

### SUMMARY

Aspects of the disclosure relate to thermoplastic compositions including: from about 10 wt% to about 80 wt% of a chemically recycled polyester component; from about 10 wt% to about 60 wt% of a reinforcing filler; and from about 5 wt% to about 20 wt% of a polycarbonate component. The thermoplastic composition has an improved metal bonding strength as compared to a comparative composition that includes a virgin polyester component instead of the chemically recycled polyester component.

Aspects of the disclosure further relate to methods for forming a thermoplastic composition, including: combining, to form a mixture, from about 10 wt% to about 80 wt% of a chemically recycled polyester component, from about 10 wt% to about 60 wt% of a reinforcing filler; and from about 5 wt% to about 20 wt% of a polycarbonate component; and forming the thermoplastic composition by injection molding, extruding, rotational molding, blow molding, or thermoforming the mixture. The thermoplastic composition has improved metal bonding strength as compared to a comparative composition that includes a virgin polyester component instead of the chemically recycled polyester component. The combined weight percent value of all components does not exceed 100 wt%, and all weight percent values are based on the total weight of the composition.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a reinforcing filler" includes mixtures of two or more reinforcing fillers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to a composition including: from about 10 wt% to about 80 wt% of a chemically recycled polyester component; from about 10 wt% to about 60 wt% of a reinforcing filler; and from about 5 wt% to about 20 wt% of a polycarbonate component. The thermoplastic composition has an improved metal bonding strength as compared to a comparative composition that includes a virgin polyester component instead of the chemically recycled polyester component. The combined weight percent value of all components does not exceed 100 wt%, and all weight percent values are based on the total weight of the composition.

In some aspects the chemically recycled polyester component includes polybutylene terephthalate (PBT). Chemically recycled PBT is a copolymer containing 1-20 % commoners, like ethylene glycol, isophthalic acid (IPA) and diethylene glycol (DEG), as shown below:

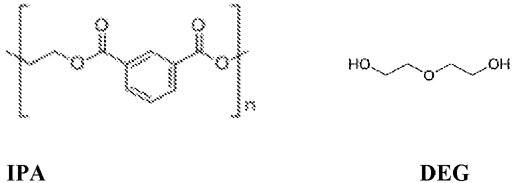

In specific aspects, the polymer component is a chemical recycled poly(butylene terephthalate), named as iQ PBT, derived from a chemical upcycled (or post-consumer recycled) PET. Fibers formed from iQ PBT provide an environmentally friendly advantage that provide desirable elastic modulus, stress at break, and elongation at break.

Commercial examples of an upcycled PBT include those available under the trade name ELCRIN^{™} iQ Resin, manufactured by SABIC^{™}. The PBT may be derived from the poly(ethylene terephthalate) component by any method that involves depolymerization of the poly(ethylene terephthalate) component and polymerization of the depolymerized poly(ethylene terephthalate) component with 1,4 butanediol to provide the PET-derived PBT. For example, the PET-derived poly(butylene terephthalate) component may be made by a process that involves depolymerizing a poly(ethylene terephthalate) and/or a poly(ethylene terephthalate) copolymer, with a 1,4 butanediol component at a temperature from 180 °C to 230 °C, under agitation, at a pressure that is at least atmospheric pressure in the presence of a catalyst component, at an elevated temperature, under an inert atmosphere, to produce a molten mixture containing an oligomer containing ethylene terephthalate moieties, an oligomer containing ethylene isophthalate moieties, an oligomer containing diethylene terephthalate moieties, an oligomer containing diethylene isophthalate moieties, an oligomer containing butylene terephthalate moieties, an oligomer containing butylene isophthalate moieties, a covalently bonded oligomeric moiety containing at least two of the foregoing moieties, 1,4 butanediol, ethylene glycol, or a combination thereof; and agitating the molten mixture at sub-atmospheric pressure and increasing the temperature of the molten mixture to an elevated temperature under conditions sufficient to form a PET-derived PBT containing at least one residue derived from the poly(ethylene terephthalate) component.

In specific aspects the PBT includes from 48 wt% to 59.4 wt% terephthalic acid (TPA) derived from recycled polyethylene terephthalate (rPET), from 12 wt% to 40.6 wt% butane diol (BDO), and from 1 wt% to 20 wt% additional monomers. The additional monomers may include, but are not limited to, ethylene glycol (EG), isophthalic acid (IPA), diethylene glycol (DEG), or a combination thereof.

The polycarbonate component may include a polycarbonate homopolymer, a polycarbonate copolymer, or a combination thereof. In a specific aspect the polycarbonate component includes a polycarbonate copolymer.

The polycarbonate copolymer may include a copolyestercarbonate in some aspects. The copolyestercarbonate copolymer may include ester units of the formula 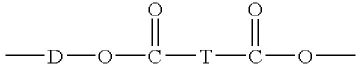 wherein D is a divalent group derived from a dihydroxy compound, and may be, for example, a C₂₋₃₀ alkylene group, a C₃₋₃₀ alicyclic group, a C₆₋₃₀ aromatic group or a polyoxyalkylene group in which the alkylene groups contain 2 to 6 carbon atoms, specifically 2, 3, or 4 carbon atoms; and T divalent group derived from a dicarboxylic acid, and may be, for example, a C₂₋₃₀ alkylene group, a C₆₋₃₀ alicyclic group, a C₆₋₃₀ alkyl aromatic group, or a C₆₋₃₀ aromatic group.

Examples of aromatic dicarboxylic acids from which the T group in the ester is derived include isophthalic or terephthalic acid, 1,2-di(p-carboxyphenyl)ethane, 4,4'-dicarboxydiphenyl ether, 4,4'-bisbenzoic acid, and combinations including at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid includes a combination of isophthalic acid and terephthalic acid wherein the weight ratio of isophthalic acid to terephthalic acid is 99:1 to 1:99. In an aspect, D is a C₂₋₆ alkylene group and T is p-phenylene, m-phenylene, naphthalene, a divalent cycloaliphatic group, or a combination thereof. This class of polyester includes the poly(alkylene terephthalates).

In an aspect, the ester units of the polyester or polyester block include arylate ester units derived from the reaction product of one equivalent of an isophthalic acid derivative and/or terephthalic acid derivative with a resorcinol of the formula 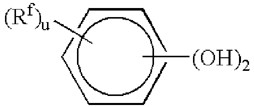 wherein each R^{f} is independently C₁₋₁₂ alkyl, or halogen, and u is 0 to 4. It will be understood that R^{f} is hydrogen when u is 0. Typically, the halogen can be chlorine or bromine. In an aspect, compounds in which the -OH groups are substituted meta to one another, and wherein R^{f} and u are as described above, are also generally referred to herein as resorcinols. Examples of compounds that may be represented by this formula include resorcinol (where u is 0), substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations including at least one of the foregoing compounds.

Such arylate ester units are also referred to herein as isophthalate-terephthalate-resorcinol ester units, sometimes referred to in abbreviated form as ITR ester units. As used herein, isophthalate-terephthalate-resorcinol ester units include a combination isophthalate esters, terephthalate esters, and resorcinol esters. In a specific aspect, isophthalate-terephthalate-resorcinol ester units include a combination of isophthalate-resorcinol ester units and terephthalate-resorcinol ester units, wherein the molar ratio of isophthalate-resorcinol ester units to terephthalate-resorcinol ester units is 99:1 to 1:99, or 95:5 to 5:95, or 90:10 to 10:90, or 80:20 to 20:80. In a specific aspect, where u is 0, the arylate ester units include isophthalate-terephthalate-resorcinol ester units in which the resorcinol is 1,3-dihydroxybenzene. Exemplary aromatic polyester blocks include poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination including at least one of these. In an aspect, a useful arylate polyester block is a poly(isophthalate-terephthalate-resorcinol) ester. In a particular aspect the copolyestercarbonate copolymer includes ITR blocks and polycarbonate blocks, as shown in the formula below: 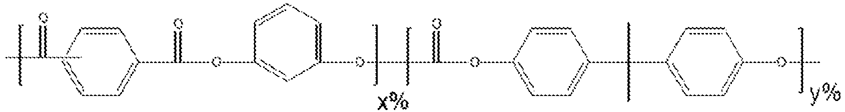 wherein x is the mole % of the ITR ester block and y is the mole % of the polycarbonate block. An exemplary copolyestercarbonate copolymer is SLX 90/10 resin, available from SABIC. SLX 90/10 includes 90 mole % ITR block and 10 mole % PC block.

In yet further aspects the copolyestercarbonate copolymer has a ratio of ITR ester units to polycarbonate monomer units of from 20:80 to 95:5, or from 85:15 to 95:5, or from 88:12 to 92:8, or about 90:10.

The reinforcing filler may include in some aspects glass fiber, silica (SiO₂) microspheres, carbon fiber, or a combination thereof. In particular aspects the reinforcing filler includes glass fiber, such as but not limited to flat glass fiber.

The thermoplastic composition may include in some aspects at least one additional additive. The at least one additional additive may include, but is not limited to, an impact modifier, an organic filler, an acid scavenger, a stabilizer, an anti-drip agent, an antioxidant, an antistatic agent, a chain extender, a colorant, a release agent, a flow promoter, a lubricant, a plasticizer, a quenching agent, a flame retardant, a UV reflecting additive, a blowing agent, a reinforcing agent, or a combination thereof.

In a particular aspect the at least one additional additive includes an epoxy-based impact modifier present in an amount of from about 0.01 wt% to up to 4 wt%. An exemplary epoxy-based impact modifier is Lotader^{®} AX8900, available from Arkema.

Thermoplastic compositions according to aspects of the disclosure have improved properties as compared to conventional compositions. In one aspect the composition has a metal bonding strength that is at least 3% higher than that of a comparative composition that includes a virgin polyester component instead of the chemically recycled polyester component. In further aspects the composition has a metal bonding strength that is at least 5% higher, at least 8% higher, at least 10% higher, at least 12% higher, at least 15% higher, from 3-30% higher, from 3-25% higher, or from 3-20% higher, than that of a comparative composition that includes a virgin polyester component instead of the chemically recycled polyester component.

Metal bonding strength may be determined according to a metal surface treatment and a nano molding technology (NMT) method. These treatments are conventional methods for determining metal bonding strength known to those skilled in the art. For the metal surface treatment, two major process are currently being used, that is, T (Taiseiplas)-treatment and TRI (Technology Rising from IWATE)-treatment. These methods were developed by different companies in Japan. Comparing these two treatment methods, TRI typically provides higher strength resulting from both physical anchoring of plastics in metal nano holes and the chemical reaction between the metal surface chemical film and plastics. In contrast, T treatment primarily relies on physical anchoring.

Metal bonding strength is used to evaluate NMT performance. In NMT processes plastic resin is injected onto a metal surface that is treated by a special chemical solution. This NMT process is developed from the integration technology of metal and plastics. It allows for manufacture of certain parts of consumer products and replaces the traditional insert molding or die casting process.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

Aspects of the disclosure relate to methods for forming a thermoplastic composition, including: combining, to form a mixture, from about 10 wt% to about 80 wt% of a chemically recycled polyester component, from about 10 wt% to about 60 wt% of a reinforcing filler; and from about 5 wt% to about 20 wt% of a polycarbonate component; and forming the thermoplastic composition by injection molding, extruding, rotational molding, blow molding, or thermoforming the mixture. The thermoplastic composition has improved metal bonding strength as compared to a comparative composition that includes a virgin polyester component instead of the chemically recycled polyester component. The combined weight percent value of all components does not exceed 100 wt%, and all weight percent values are based on the total weight of the composition.

The thermoplastic composition formed according to the methods described herein may include any of the components and in the amounts described herein, and may have any of the properties described herein.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In particular aspects the article is a nano-molding technology component.

Various combinations of elements of this disclosure are encompassed by this disclosure, e.g., combinations of elements from dependent claims that depend upon the same independent claim.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compounds described herein were compounded into pellets in a twin-screw extruder. All components except glass fiber were premixed and fed from the main throat of the feeder; the glass fiber was added downstream. The extruder had the following conditions: output 50 kilograms per hour (kg/hr); screw speed 200 revolutions per minute (rpm); vacuum -0.08 megapascals (MPa); torque 50-65%; barrel temperature 250-260 °C; and die head temperature 260 °C.

The pelletized composition was injection molded with the following conditions: dry temperature about 120-140 °C; processing temperature 270-280 °C; tool temperature 140-150 °C; injection speed 10 millimeters per second (mm/s); cooling time 20-50 seconds (s); maximum pressure 100 bar. The injection molded composition was bonded to aluminum alloy which was pretreated with a TRI or NMT treatment to create nano-holes.

Bonding strength was measured using an MTS Criterion^{®} Series 40 Electromechanical Universal Testing Machine (Model 44, C44.304) at a speed of 5 millimeters per second (mm/s). Melt Volume Rate (MVR) was measured using granulate samples dried for 4 hours (hrs) at 90 °C according to ASTM D1238. Tensile data was obtained according to ASTM D638 using a test speed of 5 millimeters per minute (mm/min). Flexural data was obtained according to ASTM 790. Notched Izod Impact (NII) and Unnotched Izod Impact (UNI) data were obtained according to ASTM D256 and ASTM D4812, respectively, at room temperature (23 °C).

Comparative and example compositions and their properties are provided in Table 1:

**Table 1 - Comparative and Example Compositions (30 wt% glass fiber)**

| **Component (in wt%)** | **C1** | **E1** | **E2** |
|---|---|---|---|
| iQ PBT195 Low intrinsic viscosity (IV) (0.63-0.68) | | 37.2 | 38.2 |
| iQ PBT315 High IV (1.15-1.22) | | 10 | 10 |
| PBT 1200-211D, PBT195 | 37.2 | | |
| PBT315, High viscosity | 10 | | |
| Polyester ether elastomer, 45% PTHF | 2.5 | 2.5 | 2.5 |
| Lotader^{®} AX8900 (impact modifier) | 3 | 3 | 2 |
| Ethylene-ethyl acrylate copolymer | 2 | 2 | 2 |
| SLX 90/10 PCP capped (PC copolymer) | 14.5 | 14.5 | 14.5 |
| Mono Zinc Phosphate (MZP) | 0.05 | 0.05 | 0.05 |
| Irgafos168, Alkanox 240 | 0.2 | 0.2 | 0.2 |
| Hindered Phenol stabilizer, AO1010 | 0.1 | 0.1 | 0.1 |
| Pentaerythritol tetrastearate (mold release) | 0.2 | 0.2 | 0.2 |
| 2-(2' hydroxy-5-T-Octylphenyl)-Benzotiiazole | 0.25 | 0.25 | 0.25 |
| Nittobo, CSG 3PA-830, flat glass fiber (GF) | 30 | 30 | 30 |
| | | | |

| **Properties** | | | |
|---|---|---|---|
| Melt volume rate (MVR) at 250 °C, 5 kg (cubic centimeters per 10 min (cc/10 min)) | 12 | 17 | 22 |
| MVR at 275 °C, 5 kg (cc/10 min) | 18 | 28 | 40 |
| Bonding force, TRI butt 260/140 (MPa) | 26.7 | 29.8 | 30.8 |
| Bonding force, NMT share 260/140 (MPa) | 30.3 | 28.5 | 34.2 |
| Tensile modulus (TM), 5 mm/min (MPa) | 7732 | 7691 | 7899 |
| Tensile strength at break, 5 mm/min (MPa) | 118 | 118 | 120 |
| Tensile elongation at break, 5 mm/min (%) | 2.9 | 2.7 | 2.6 |
| Flexural modulus (FM), 1.3 mm/min (MPa) | 7610 | 7750 | 7880 |
| Flexural strength at yield (FS-y), 1.3 mm/min (MPa) | 181 | 186 | 190 |
| NII, 23 °C, Joules per meter (J/m) | 164 | 156 | 146 |
| NII, -30 °C (J/m) | 126 | 125 | 118 |

From the results it is observed that example compositions E1 and E2 (including iQ PBT resin) had improved bonding force in TRI treatment as compared to composition C1 which includes virgin PBT resin. In addition, composition E2 which includes less impact modifier (Lotader AX8900) also had improved NMT bonding force. The results suggest that iQ PBT compositions have improved bonding strength as compared to compositions including virgin PBT. Mechanical properties of compositions E1 and E2 were generally comparable to comparative composition C1.

Compositions including 40-42 wt% glass fiber were prepared and tested as shown in Table 2:

**Table 2 - Comparative and Example Compositions (40-42 wt% glass fiber)**

| **Component (wt%)** | **C2** | **E3** | **E4** | **C3** | **C4** |
|---|---|---|---|---|---|
| iQ PBT195 Low IV (0.63-0.68) | | 27.6 | 28.1 | | |
| iQ PBT315 High IV (1.15-1.22) | | 17.5 | 18 | | |
| PBT 1200-211D, PBT195 | 27.6 | | | 28.1 | 29.6 |
| PBT315, High viscosity | 17.5 | | | 28 | 29.5 |
| Lotader^{®} AX8900 (impact modifier) | 4 | 4 | 3 | 3 | |
| C017, ML5221, PC (PC homopolymer) | 8 | 8 | 8 | | |
| Mono Zinc Phosphate (MZP) (stabilizer) | 0.05 | 0.05 | 0.05 | 0.1 | 0.1 |
| UV5411 (stabilizer) | 0.25 | 0.25 | 0.25 | 0.3 | 0.3 |
| Hindered Phenol stabilizer, AO1010 | 0.1 | 0.1 | 0.1 | 0.1 | 0.1 |
| Pentaerythritol tetrastearate (mold release) | 0.3 | 0.3 | 0.3 | 0.2 | 0.2 |
| Phosphonite PEPQ (stabilizer) | 0.2 | 0.2 | 0.2 | 0.2 | 0.2 |
| Nittobo, CSG 3PA-830, flat glass fiber (GF) | 42 | 42 | 42 | 40 | 40 |
| | | | | | |
| MVR at 250 °C, 5 kg (cc/10 min) | 9.8 | 9.7 | 14.4 | 10 | 15 |
| MVR at 275 °C, 5 kg (cc/10 min) | 26.1 | 29 | 37 | - | - |
| Bonding force, TRI butt 260/140 (MPa) | 35.1 | 36.2 | 39.9 | 28 | 22 |
| Tensile modulus (TM), 5 mm/min (MPa) | 12891 | 12836 | 13005 | 12100 | 12600 |
| Tensile strength at break, 5 mm/min (MPa) | 150 | 144 | 152 | 140 | 159 |
| Tensile elongation at break, 5 mm/min (%) | 2.8 | 2.5 | 2.6 | 2.4 | 2.5 |
| Flexural modulus (FM), 1.3 mm/min (MPa) | 11600 | 11400 | 11400 | 11100 | 11800 |
| Flexural strength at yield (FS-y), 1.3 mm/min (MPa) | 243 | 239 | 243 | 210 | 220 |
| Falling dart impact at 3 mm, 280/150 °C (Newtons, N) | 2609 | 2669 | 2602 | - | - |
| NII, 23 °C, Joules per meter (J/m) | 158 | 160 | 155 | 130 | 110 |
| NII, -30 °C (J/m) | 134 | 141 | 141 | 100 | 103 |
| UNII, 23 °C (J/m) | 967 | 1060 | 1040 | 860 | 810 |
| UNII, -30 °C (J/m) | 1170 | 1170 | 1160 | - | - |

From the results it is observed that example composition E3 including iQ PBT had slightly improved bonding force as compared to comparative composition C1, and example composition E4 - with a lower impact modifier (Lotader) content - had an even greater improvement in bonding force as compared to composition C1.

Comparative compositions C3 and C4 include virgin PBT instead of iQ PBT. It is recognized by those skilled in the art that replacing PBT with iQ PBT will often reduce the mechanical properties of the thermoplastic composition (e.g., metal bonding strength, NII). However, comparing C1 to E1 and C2 to E3, it has been found in the present disclosure that compositions including iQ PBT can unexpectedly and counterintuitively achieve an improved metal bonding strength with substantially the same level of NII.

Further, from comparative compositions C3 and C4 it is seen that in a composition including virgin PBT a lower content of impact modifier does not help increase the metal bonding strength of the composition. For example, comparative composition C4 has a TRI bonding force lower than that of comparative C3. In contrast, with reference to example compositions E3 and E4, compositions including iQ PBT can have a lower impact modifier content but still have an improved metal bonding strength and substantially the same level of NII.

From these results it can be concluded that glass-filled iQ PBT compositions have better bonding strength and are thus more suitable for NMT applications than comparable compositions including virgin PBT.

The scope of the disclosure should be determined with reference to the appended claims, along with the full scope of equivalents to which such claims are entitled.

## Claims

1. A thermoplastic composition comprising:
from 10 wt% to 80 wt% of a chemically recycled polyester component;
from 10 wt% to 60 wt% of a reinforcing filler; and
from 5 wt% to 20 wt% of a polycarbonate component,
wherein the thermoplastic composition has an improved metal bonding strength as compared to a comparative composition that includes a virgin polyester component instead of the chemically recycled polyester component, wherein metal bonding strength is evaluated according to a TRI-treatment metal surface treatment, and
wherein the combined weight percent value of all components does not exceed 100 wt%, and all weight percent values are based on the total weight of the composition.

2. The thermoplastic composition according to claim 1, wherein the chemically recycled polyester component comprises polybutylene terephthalate (PBT).

3. The thermoplastic composition according to claim 2, wherein the PBT comprises from 48 wt% to 59.4 wt% terephthalic acid (TPA) derived from recycled polyethylene terephthalate (rPET), from 12 wt% to 40.6 wt% butane diol (BDO), and from 1 wt% to 20 wt% additional monomers.

4. The thermoplastic composition according to any of claims 1 to 3, wherein the polycarbonate component comprises a polycarbonate homopolymer, a polycarbonate copolymer, or a combination thereof.

5. The thermoplastic composition according to claim 4, wherein the polycarbonate component comprises a polycarbonate copolymer.

6. The thermoplastic composition according to claim 5, wherein the polycarbonate copolymer comprises isophthalate-terephthalate-resorcinol (ITR) blocks and polycarbonate blocks.

7. The thermoplastic composition according to claim 6, wherein the polycarbonate copolymer has a ratio of ITR blocks to polycarbonate blocks of from 20:80 to 95:5.

8. The thermoplastic composition according to claim 6, wherein the polycarbonate copolymer comprises 90 mole % ITR blocks and 10 mole % polycarbonate blocks.

9. The thermoplastic composition according to any of claims 1 to 8, wherein the reinforcing filler comprises glass fiber, silica (SiO₂) microspheres, carbon fiber, or a combination thereof.

10. The thermoplastic composition according to claim 9, wherein the reinforcing filler comprises flat glass fiber.

11. The thermoplastic composition according to any of claims 1 to 10, wherein the composition comprises at least one additional additive comprising an impact modifier, an organic filler, an acid scavenger, a stabilizer, an anti-drip agent, an antioxidant, an antistatic agent, a chain extender, a colorant, a release agent, a flow promoter, a lubricant, a plasticizer, a quenching agent, a flame retardant, a UV reflecting additive, a blowing agent, a reinforcing agent, or a combination thereof.

12. The thermoplastic composition according to claim 11, wherein the at least one additional additive comprises an epoxy-based impact modifier present in an amount of from 0.01 wt% to up to 4 wt%.

13. The thermoplastic composition according to any of claims 1 to 12, wherein the composition has a metal bonding strength that is at least 3% higher than that of a comparative composition that includes a virgin polyester component instead of the chemically recycled polyester component.

14. An article comprising the thermoplastic composition according to any of claims 1 to 13, wherein the article is a nano-molding technology component.

15. A method for forming a thermoplastic composition, comprising:
combining, to form a mixture, from 10 wt% to 80 wt% of a chemically recycled polyester component, from 10 wt% to 60 wt% of a reinforcing filler; and from 5 wt% to 20 wt% of a polycarbonate component; and
forming the thermoplastic composition by injection molding, extruding, rotational molding, blow molding, or thermoforming the mixture,
wherein the thermoplastic composition has improved metal bonding strength as compared to a comparative composition that includes a virgin polyester component instead of the chemically recycled polyester component, wherein metal bonding strength is evaluated according to a TRI-treatment metal surface treatment, and
wherein the combined weight percent value of all components does not exceed 100 wt%, and all weight percent values are based on the total weight of the composition.

## Patentansprüche

1. Eine thermoplastische Zusammensetzung, die Folgendes umfasst:
10 bis 80 Gewichtsprozent einer chemisch recycelten Polyesterkomponente;
10 bis 60 Gewichtsprozent eines Verstärkerfüllstoffs und
5 bis 20 Gewichtsprozent einer Polycarbonatkomponente,
wobei die thermoplastische Zusammensetzung eine verbesserte Metallbindungsstärke hat, verglichen mit einer Vergleichszusammensetzung, die eine rohe Polyesterkomponente anstelle der chemisch recycelten Polyesterkomponente hat, wobei die Metallbindungsstärke entsprechend einer TRI-Behandlungs-Metalloberflächenbehandlung bewertet wird, und
wobei die kombinierten Gewichtsprozentwerte aller Komponenten 100 Gewichtsprozent nicht überschreiten und alle Gewichtsprozentwerte auf dem Gesamtgewicht der Zusammensetzung basieren.

2. Die thermoplastische Zusammensetzung gemäß Anspruch 1, wobei die chemisch recycelte Polyesterkomponente Polybutylenterephthalat (PBT) umfasst.

3. Die thermoplastische Zusammensetzung gemäß Anspruch 2, wobei das PBT 48 bis 59,4 Gewichtsprozent Terephthalsäure (TPA), abgeleitet von recyceltem Polyethylenterephthalat (rPET), 12 bis 40,6 Gewichtsprozent Butandiol (BDO) und 1 bis 20 Gewichtsprozent zusätzliche Monomere umfasst.

4. Die thermoplastische Zusammensetzung gemäß einem beliebigen der Ansprüche 1 bis 3, wobei die Polycarbonatkomponente ein Polycarbonathomopolymer, ein Polycarbonatcopolymer oder eine Kombination davon umfasst.

5. Die thermoplastische Zusammensetzung gemäß Anspruch 4, wobei die Polycarbonatkomponente ein Polycarbonatcopolymer umfasst.

6. Die thermoplastische Zusammensetzung gemäß Anspruch 5, wobei das Polycarbonatcopolymer Isophthalat-Terephthalat-Resorcinol-(ITR-)Blöcke und Polycarbonatblöcke umfasst.

7. Die thermoplastische Zusammensetzung gemäß Anspruch 6, wobei das Polycarbonatcopolymer ein Verhältnis der ITR-Blöcke zu den Polycarbonatblöcken von 20:80 bis 95:5 hat.

8. Die thermoplastische Zusammensetzung gemäß Anspruch 6, wobei das Polycarbonatcopolymer 90 Molprozent ITR-Blöcke und 10 Molprozent Polycarbonatblöcke umfasst.

9. Die thermoplastische Zusammensetzung gemäß einem beliebigen der Ansprüche 1 bis 8, wobei der Verstärkerfüllstoff Glasfaser, Siliziumdioxid-(SiO₂-)Mikrokügelchen, Kohlenstofffaser oder eine Kombination davon umfasst.

10. Die thermoplastische Zusammensetzung gemäß Anspruch 9, wobei der Verstärkerfüllstoff flache Glasfaser umfasst.

11. Die thermoplastische Zusammensetzung gemäß einem beliebigen der Ansprüche 1 bis 10, wobei die Zusammensetzung mindestens einen zusätzlichen Zusatzstoff umfasst, der einen Elastifikator, einen organischen Füllstoff, einen Säurefänger, ein Antitropfmittel, ein Antioxidans, ein Antistatikum, einen Kettenverlängerer, einen Farbstoff, ein Trennmittel, eine Fließhilfe, ein Schmiermittel, einen Plastifikator, ein Ablöschmittel, ein Flammverzögerungsmittel, einen UV-reflektierenden Zusatzstoff, ein Treibmittel, ein Verstärkungsmittel oder eine Kombination davon umfasst.

12. Die thermoplastische Zusammensetzung gemäß Anspruch 11, worin der mindestens eine zusätzliche Zusatzstoff einen Elastifikator auf Epoxidbasis umfasst, der in einer Menge von 0,01 Gewichtsprozent bis 4 Gewichtsprozent vorliegt.

13. Die thermoplastische Zusammensetzung gemäß einem beliebigen der Ansprüche 1 bis 12, wobei die Zusammensetzung eine Metallbindungsstärke hat, die um mindestens 3% höher ist als diejenige einer Vergleichszusammensetzung, die eine rohe Polyesterkomponente anstelle der chemisch recycelten Polyesterkomponente einschließt.

14. Ein Gegenstand, der die thermoplastische Zusammensetzung gemäß einem beliebigen der Ansprüche 1 bis 13 umfasst, wobei der Gegenstand eine Nanoform-Technologiekomponente ist.

15. Ein Verfahren zum Formen einer thermoplastischen Zusammensetzung, das Folgendes umfasst:
das Kombinieren von 10 bis 80 Gewichtsprozent einer chemisch recycelten Polyesterkomponente, 10 bis 60 Gewichtsprozent eines Verstärkerfüllstoffs und 5 bis 20 Gewichtsprozent einer Polycarbonatkomponente, um eine Mischung zu bilden; und
das Formen der thermoplastischen Zusammensetzung durch Spritzgießen, Extrudieren, Rotationsformen, Blasformen oder Thermoformen der Mischung,
wobei die thermoplastische Zusammensetzung eine verbesserte Metallbindungsstärke hat, verglichen mit einer Vergleichszusammensetzung, die eine rohe Polyesterkomponente anstelle der chemisch recycelten Polyesterkomponente einschließt, wobei die Metallbindungsstärke entsprechend einer TRI-Behandlungs-Metalloberflächenbehandlung bewertet wird, und
wobei die kombinierten Gewichtsprozentwerte aller Komponenten 100 Gewichtsprozent nicht überschreiten und alle Gewichtsprozentwerte auf dem Gesamtgewicht der Zusammensetzung basieren.

## Revendications

1. Composition thermoplastique comprenant :
de 10 % en poids à 80 % en poids d'un composant polyester recyclé chimiquement ;
de 10 % à 60 % en poids d'une charge de renforcement ; et
de 5 % à 20 % en poids d'un composant polycarbonate,
où la composition thermoplastique présente une force de liaison métallique améliorée par rapport à une composition comparative qui comprend un composant polyester vierge au lieu du composant polyester recyclé chimiquement, où la force de liaison métallique est évaluée selon un traitement de surface métallique TRI, et
où la valeur pondérale combinée de tous les composants ne dépasse pas 100 % en poids, et toutes les valeurs pondérales sont basées sur le poids total de la composition.

2. Composition thermoplastique selon la revendication 1, où le composant polyester recyclé chimiquement comprend du polybutylène téréphtalate (PBT).

3. Composition thermoplastique selon la revendication 2, où le PBT comprend de 48 % à 59,4 % en poids d'acide téréphtalique (TPA) dérivé de polyéthylène téréphtalate recyclé (rPET), de 12 % à 40,6 % en poids de butane diol (BDO) et de 1 % à 20 % en poids de monomères supplémentaires.

4. Composition thermoplastique selon l'une quelconque des revendications 1 à 3, où le composant polycarbonate comprend un homopolymère de polycarbonate, un copolymère de polycarbonate ou une combinaison de ceux-ci.

5. Composition thermoplastique selon la revendication 4, où le composant polycarbonate comprend un copolymère de polycarbonate.

6. Composition thermoplastique selon la revendication 5, où le copolymère de polycarbonate comprend des blocs isophtalate-téréphtalate-résorcinol (ITR) et des blocs polycarbonate.

7. Composition thermoplastique selon la revendication 6, où le copolymère de polycarbonate a un rapport des blocs ITR aux blocs polycarbonate compris entre 20:80 et 95:5.

8. Composition thermoplastique selon la revendication 6, où le copolymère de polycarbonate comprend 90 % en moles de blocs ITR et 10 % en moles de blocs de polycarbonate.

9. Composition thermoplastique selon l'une quelconque des revendications 1 à 8, où la charge de renforcement comprend de la fibre de verre, des microsphères de silice (SiO₂), de la fibre de carbone ou une combinaison de celles-ci.

10. Composition thermoplastique selon la revendication 9, dans laquelle la charge de renforcement comprend des fibres de verre plates.

11. Composition thermoplastique selon l'une quelconque des revendications 1 à 10, où la composition comprend au moins un additif supplémentaire comprenant un modificateur d'impact, une charge organique, un piégeur d'acide, un stabilisateur, un agent anti-goutte, un antioxydant, un agent antistatique, un agent d'allongement de chaîne, un colorant, un agent de démoulage, un promoteur d'écoulement, un lubrifiant, un plastifiant, un agent de trempe, un retardateur de flamme, un additif réfléchissant les UV, un agent gonflant, un agent de renforcement ou une combinaison de ceux-ci.

12. Composition thermoplastique selon la revendication 11, où le au moins un additif supplémentaire comprend un modificateur d'impact à base d'époxy présent en une quantité comprise entre 0,01 % en poids et 4 % en poids.

13. Composition thermoplastique selon l'une quelconque des revendications 1 à 12, où la composition a une force de liaison métallique qui est au moins 3 % supérieure à celle d'une composition comparative qui comprend un composant polyester vierge au lieu du composant polyester recyclé chimiquement.

14. Article comprenant la composition thermoplastique selon l'une quelconque des revendications 1 à 13, où l'article est un composant de technologie de nano-moulage.

15. Procédé de formation d'une composition thermoplastique, comprenant :
la combinaison, pour former un mélange, de 10 % à 80 % en poids d'un composant polyester recyclé chimiquement, de 10 % à 60 % en poids d'une charge de renforcement ; et de 5 % à 20 % en poids d'un composant polycarbonate ; et
la formation de la composition thermoplastique par moulage par injection, extrusion, moulage par rotation, moulage par soufflage ou thermoformage du mélange,
où la composition thermoplastique présente une force de liaison métallique améliorée par rapport à une composition comparative qui comprend un composant polyester vierge au lieu du composant polyester recyclé chimiquement, où la force de liaison métallique est évaluée selon un traitement de surface métallique TRI, et
où la valeur en pourcentage en poids combinée de tous les composants ne dépasse pas 100 % en poids, et toutes les valeurs en pourcentage en poids sont basées sur le poids total de la composition.
